# EUROPÄISCHE PATENTSCHRIFT

(11) **EP 3 983 592 B1**
(45) Veröffentlichungstag und Bekanntmachung des Hinweises auf die Patenterteilung: **10.01.2024**
(21) Anmeldenummer: 20739289.5
(22) Anmeldetag: 01.07.2020
(51) Int. Cl.: D04H 11/08, B60N 3/04, B60R 13/01

(54) **DREIDIMENSIONAL GEFORMTER VELOURS-TEPPICH UND VERFAHREN ZU DESSEN HERSTELLUNG**
THREE DIMENSIONALLY FORMED VELOURS CARPET AND A METHOD FOR PRODUCING SAME
TAPIS EN VELOURS TRIDIMENSIONNEL EN FORME ET SON PROCÉDÉ DE FABRICATION

(30) Priorität: 04.07.2019 DE 102019118163
(43) Veröffentlichungstag der Anmeldung: 20.04.2022
(73) Patentinhaber: Adler Pelzer Holding GmbH, 58099 Hagen (DE)
(72) Erfinder: SCHULZE, Volkmar, 84069 Schierling (DE); FALK, Frank, 72459 Albstadt (DE); SINGH, Ray, 58332 Schwelm (DE)
(74) Vertreter: Hannke Bittner & Partner mbB Regensburg
(86) Internationale Anmeldenummer: PCT/EP2020/068555
(87) Internationale Veröffentlichungsnummer: WO 2021/001439

(56) Entgegenhaltungen:
- WO-A1-2011/045691
- WO-A1-2018/210852
- WO-A1-2020/148147
- DE-A1- 4 409 771
- DE-U1-202009 000 775

## Beschreibung

Gegenstand der Erfindung ist ein Verfahren zur Herstellung eines dreidimensional verformbaren Velours-Teppichs für Bodenverkleidung, Gepäckraumverkleidung oder Ladebodenverkleidung für Kraftfahrzeuge, dessen Teppich-Oberfläche sichtseitig eine genadelte Struktur aufweist sowie die Verkleidungen selbst.

Insbesondere durch die Entwicklung von E-Kraftfahrzeugen sucht man im Design/Styling nach alternativen Lösungen in der verformbaren Teppichoberfläche im Vergleich zum einfarbigen, glatten Flachnadelvlies-, Velours- und Tuftingteppich.

Bei Kraftfahrzeugen mit Hecktür (Kombis) und umklappbarer Rücksitzlehne trifft dieses Styling insbesondere auch auf den Gepäckraum und den Ladeboden zu, da man bei geöffneter Hecktür und umgeklappten Rücksitzlehnen von hinten in den damit freigegebenen Innenraum des Kraftfahrzeuges schaut. Beides, Gepäck- und Fahrgastraum, müssen dann ein einheitliches, in sich stimmiges Styling verkörpern.

Im Stand der Technik sind verschiedene Ausführungen von Teppich-Oberwaren bei Kraftfahrzeug-Bodenverkleidungen, Gepäckraumverkleidungen sowie Ladebodenverkleidungen bekannt, nämlich insbesondere Tufting-, Velours- und Flachnadelvlies-Teppiche.

Bei Tufting-Teppichen wird insbesondere PA6.6, PA6, PP, rPA und PET, NET sowie die entsprechenden bio-basierenden Polyamide (PA 5.10; PA 6.10); und bei den Velours- und Flachnadelvlies-Teppichen PET, PET/PP, PP, PA/PET und rPET vorwiegend als Garn-/Fasermaterial eingesetzt.

Im Stand der Technik sind Verfahren zur Herstellung von Velours-Teppichen bekannt, siehe unter anderem DE 44 09 771 A1, DE 29 00 935 C2 und DE 10 2008 026 968 A1.

Ein Velours-Vlies ist ein veredeltes Nadelvlies, bei dem bei einem vorgefertigten Vliesmaterial mittels Vernadelung in ein laufendes homogenes Bürstenband, ein Faserpol erzeugt wurde. Wenn dieses dann noch, in einem weiteren Prozeßschritt, auf definierte Flor-/Polhöhe geschoren ist, erhält man ein Schervelours.

Ein Velours-Teppich unterscheidet sich von einem Nadelvlies-Teppich durch eine hochwertigere Optik und Haptik, sowie ein verbessertes Verschleißverhalten.

Zur Homogenisierung des Einstichbildes bei einem vernadelten Vlies sind in US 9 567 698 B2, US 2016/0069006 A1, US 9 260 806 B2, US 2015/0259836 A1 und EP 2 918 719 A1 spezielle Verfahren beschrieben. Bei der Herstellung eines flachen

Nadelvlieses werden Stapelfasern nach einer Vliesbildung mittels Krempel und Kreuzleger über vielfaches Vernadeln zwischen zwei Metallplatten verfestigt. In einem weiteren Arbeitsschritt mittels nochmaliger Vernadelung in ein Bürstenband, kann aus diesem flachen Nadelvlies ein Velours-Nadelvlies erzeugt werden. Bei beiden Varianten ist es für eine gute Endfestigkeit notwendig, die Stapelfasen nach dem Vernadeln thermisch oder chemisch einzubinden.

Die Einbindung der Fasern erfolgt größtenteils mittels geschäumtem Latex oder Acrylat. Ein kombinierter Einsatz von Latex oder Acrylat und BiCo-Faser (coPET/PET-Bikomponentenfaser) ist in praxi ebenfalls üblich. Des Weiteren wird die Einbindung auch ausschließlich über BiCo-Faser realisiert.

Speziell in WO 2017/061970 A1 wird auf das Einbinden des Teppichs mittels Bikomponenten (BiCo)-Fasern eingegangen. Hier wird die Optimierung der (BiCo)Faserfixierung durch den Einsatz spezieller Schlitzdüsen im Trockenofen beschrieben. Daneben sind bekannt: aufgestreutes PE, EVA/PE-Gemisch, aufextrudiertes PE, Folien, Heißkleber, thermoplastische Dispersionen und das Thermobonding (EP 1 598 476 B1).

In DE 2 008 439 C [US 3 755 055] wird ein Verfahren beschrieben, bei dem eine einfarbige oder melangierte Vliesstoffbahn und eine mit Pigmentfarbstoffen mit einem ornamentalen Muster ein- oder mehrfarbig einseitig bedruckte Vliesstoffbahn aufeinandergelegt werden, wobei die bedruckte Seite der einen Vliesstoffbahn der unbedruckten Vliesstoffbahn abgekehrt ist, und danach beide Vliesstoffbahnen von der unbedruckten Fläche her soweit durchgenadelt werden, dass sich die Fasern der unbedruckten Vliesstoffbahn mit den Fasern der bedruckten Vliesstoffbahn unter Bildung eines Flores auf deren bedruckter Fläche vermischen und deren aufgedrucktes ornamentales Muster zu einem weichen und dreidimensional wirkenden Muster verändert wird.

DE 39 04 526 A1 offenbart einen Bodenbelag und ein Verfahren zu seiner Herstellung. Zur Herstellung des Bodenbelags aus zwei Schichten aus Nadelvlies, von denen die Oberschicht an ihrer Oberseite strukturiert ist, wird die Unterschicht von der Unterseite der strukturierten Oberschicht her in diese eingenadelt. Dabei ist die Nadeltiefe wesentlich geringer als die Stärke der Oberschicht. Durch das Zusammennadeln der beiden Schichten von der Rückseite der Oberschicht her wird die Struktur dieser Oberschicht nicht zerstört. Anschließend an das Zusammennadeln erfolgt ein zusätzliches Verbinden beider Schichten durch Imprägnieren mit einem Bindemittel durch die Oberschicht hindurch.

In EP 0 888 743 A1 [US 2002/0029445 A1, US 6 287 407 B1, US 6 398 895 B1] wird ein strukturiertes Textilmaterial aus mindestens zwei verschiedenen Basisvliesen für den Bereich der Reinigungstextilien beschrieben. Die technische Lehre betrifft ein strukturiertes Textilmaterial aus mindestens zwei verschiedenen vernadelten Basisvliesen, wobei die Basisvliese eine durch Nadelung von mindestens einer Seite erhaltene Struktur aufweisen, wobei die zur Strukturnadelung verwendeten Nadeln Gabel- oder Kranznadeln sind und die Tiefe der Gabeln beziehungsweise der Bärte so gewählt ist, dass sich diese beim Durchstich vollständig mit Fasern des den Nadeln zugewandten Basisvlieses füllen und wobei das Textilmaterial im Muster, im Fond und auf der Rückseite unvermischte, reine Fasern aufweist. Im Verfahren zur Herstellung des strukturierten Textilmaterials wird zum einen angeführt, dass eine Kaschierung der beiden Schmelzfasern aufweisenden vernadelten Basisvliese ohne Aktivierung der Schmelzfasern erfolgt, dass anschließend eine ein- oder zweiseitige Strukturnadelung erfolgt, und dass die Schmelzfasern der Basisvliese nach der Strukturnadelung aktiviert werden; und zum anderen, dass vor dem Einlauf in eine Strukturnadelmaschine zwischen die beiden Schmelzfasern aufweisenden vernadelten Basisvliese eine Zwischenlage aus einem eine Klebung der beiden Basisvliese vermögenden Werkstoffe, insbesondere ein Klebevlies, eingebracht wird, dass die beiden Basisvliese und die Zwischenlage miteinander einer ein- oder zweiseitigen Strukturnadelung unterworfen werden, und dass anschließend die Verbindung der beiden Basisvliese und der Zwischenlage durch Aktivierung der Schmelzfasern und der Zwischenlage hergestellt wird.

In WO 2011/045691 A1 wird ein graphischer Velours-Teppich und dessen Herstellung beschrieben. Anwendung finden hierbei zwei Strukturierungsmaschinen besetzt mit jeweils 2 Nadelbrettern und ein Basis- und ein Obervliesstoff. Das Basisvlies wird zwischen den zwei Strukturierungsmaschinen auf das Obervlies zugeführt und in der zweiten Strukturierungsmaschine zu einem Vlies vernadelt. Die Nadeln in den Nadelbrettern sind nach vorbestimmten Mustern angeordnet. Auf das Basisvlies ist ein Klebstoff aufgebracht, der dann die Fasern der Vliesschichten fixiert/einbindet.

Weiterhin ist bekannt, Muster in einer Nadelfilzbahn mittels mehrerer Komponenten, Faserschichten und mehrerer Nadelungsvorgänge zu erzeugen, siehe u.a. DE 103 46 473 A1 und WO 2011/065851 A1.

In DE 20 2009 000 775 U1 wird ein Faserflächengebilde dargelegt, das aus einem Nadelvliesstoff bzw. Faserflor (Oberflächenschicht) auf der Sichtseite und einem Faserflor bzw. Faservlies (Musterschicht), welche durch Vernadelung mittels unterschiedlicher Nadeltypen/Nadelarten und/oder Nadelanordnungen und/oder Einstichrichtungen und/oder Einstichtiefen miteinander verbunden sind, besteht. Die Musterschicht ist vorbearbeitet und unterscheidet sich von der Oberflächenschicht in den Fasern selbst und der Faserfärbung. Auch ist die Musterschicht vor dem Vernadeln mit der Oberflächenschicht ausgestanzt und/oder ausgeschnitten sowie ist gefärbt und/oder bedruckt. Des Weiteren werden mehrere unterschiedliche Musterflore bzw. Mustervliese als Musterschicht eingesetzt. Die Oberflächenschicht ist rückvernadelt und oberflächenbehandelt.

In der noch unveröffentlichten DE 10 2019 100 916.2 wird ein Nadelvlies-Teppich für Kraftfahrzeug-Innenverkleidungen, durch Anwendung unterschiedlicher Nadeltypen über die Breite des Nadelbrettes hergestellt. In den ebenfalls noch unveröffentlichten DE 10 2019 100 919.7 und DE 10 2019 100 922.7 werden zur Herstellung strukturierter Velours- Teppich-Oberflächen für Kraftfahrzeuginnenverkleidungen zum einen Nadeln unterschiedlicher Länge und zum anderen Bürsten unterschiedlicher Borsten-Höhe angewendet.

Aus der WO 2018/210852 A1 ist ein Verfahren zur Herstellung eines Nadelteppichs mit einer velourartigen und verschleißfesteren Oberfläche bekannt, die gegenüber herkömmlichen Flachnadelvliesen und Dilourteppichen vorteilhafte Eigenschaften aufweist.

Im Stand der Technik sind keine Velours-Teppiche für Kraftfahrzeuginnenverkleidungen bekannt, die 3D-Ornamente / Teppichmuster über Lange und Breite aufweisen, und die sich in der Höhe (Polhöhe) unterscheiden.

Die Aufgabe der vorliegenden Erfindung gegenüber dem vorgenannten Stand der Technik besteht somit in der d-ie Bereitstellung eines verformungsgerechten, strukturgenadelten Teppichs, der den Fahrgast- und/oder Gepäckraum und/oder Laderaum von Kraftfahrzeugen dahin aufwertet, dass dieser eine "Wohnzimmer-/ Wohlfühl-Atmosphäre" aufweist. Insbesondere ist es Aufgabe der Erfindung, bei der Herstellung von Velours-Teppich und/oder der Velourisierung von NadelvliesTeppich ein bleibendes, strapazierfähiges Oberflächenmuster mit dreidimensionalen Struktur einzubringen, das über die Breite und Lange der Teppichoberfläche unterschiedlich strukturiert ist und einer dreidimensionalen Verformung zu einer Bodenverkleidung, Gepäckraumverkleidung oder Ladebodenverkleidung für Kraftfahrzeuge standhalt.

Gegenstand der vorliegenden Erfindung ist in einer ersten Ausführungsform ein Verfahren zur Herstellung eines dreidimensional verformbaren Velours-Teppichs für eine Bodenverkleidung, eine Gepäckraumverkleidung oder eine Ladebodenverkleidung Kraftfahrzeuges mit strukturgenadelter, verformungsstabiler Oberfläche mit einer Grammatur des Teppichs im Bereich von 180 g/m ² bis 700 g/m ² , das dadurch gekennzeichnet ist, dass man bei einer definierten Einstellung der Einstichtiefe sowie einer definierten Einstellung der Einstichdichte einen Velours-Teppich aus einem Ausgangsvlies herstellt, wobei man ein Bürstenband einsetzt, das segmentweise oder teilflächig Abschnitte unterschiedlicher Bürsten und/oder Bürstenanordnungen beziehungsweise Bürsten unterschiedlicher Borsten-Höhe aufweist, zwei oder mehrere Nadeltypen unterschiedlicher Länge segmentweise über die Breite eines Nadelbrettes anordnet, und diesen Velours-Teppich mit einer oder mehreren Unterschichten versieht und verformt.

Kern der vorliegenden Erfindung ist somit die Bereitstellung eines, in einem üblichen Standardverfahren hergestellten, Velours-Teppichs eine Bodenverkleidung, eine Gepäckraumverkleidung oder eine Ladebodenverkleidung eines Kraftfahrzeugs mit strukturgenadelter, verformungsgerechter Sichtoberfläche allein durch die Anordnung von unterschiedlich langen Nadeltypen über die Breite des Nadelbrettes und/oder der Nadelbretter und durch die Anordnung von Bürsten des Bürstenbandes mit unterschiedlicher Bürsten-/Borsten-Höhe und Bürsten-/Borsten-Struktur, die zur Vernadelung bzw. Velourisierung des Teppichs für eine Bodenverkleidung, eine Gepäckraumverkleidung Oder ei ne Ladebodenverkleidung eines Kraftfahrzeuges genutzt werden.

Das Oberflächenmaterial für eine Kraftfahrzeug-Innenverkleidung selbst ist ein Velours-Teppich, der mit mehreren Unterschichten versehen sein kann sowie eine Schaum- oder Faser-/Vlies-Isolation, zur Karosserie hin, haben kann.

Die Bestückung der Nadelbretter über die Breite erfolgt dabei mit vorab definierten Nadeltypen/-geometrien, insbesondere der Nadellängen, und die Bestückung des Bürstenbandes über die Breite und Länge erfolgt dabei mit vorab definierten Bürsten-/Borsten-Höhen und/oder Bürsten-/Borsten-Strukturen, die somit eine vorabbestimmte dreidimensionale Struktur der Velours-Oberfläche erzeugen.

In einer besonders bevorzugten Ausführungsform werden Nadeltypen segmentweise eingesetzt, die sich neben der Länge auch in weiteren Parametern, wie beispielsweise der Feinheit, der Gabelöffnung und der Gabelorientierung unterscheiden. Der Vorteil der vorliegenden Erfindung besteht in der Bereitstellung eines verformungsgerechten/- stabilen, strukturgenadelten Velours-Teppich für die Herstellung von Kraftfahrzeug-Boden- und Gepäckraumverkleidungen oder Ladebodenverkleidungen ohne einen zusätzlichen Arbeitsschritt bei dessen Herstellung im Vergleich zur Standard-Velours-Teppich-Produktion.

Das Verfahren der vorliegenden Erfindung ist umsetzbar -ohne zusätzliche Vliesschichten, Vernadelungsstufen, Nadelmaschinen bzw. Nadelbretter- auf "Standard"-Anlagen allein durch die Bürsten-/Borsten-Höhen und Bürsten/Borsten-Strukturen, der damit erfolgten Bestückung des Bürstenbandes über die Breite und Länge, sowie durch die Nadelgeometrie/Nadeltype, der Nadellänge der über die Breite des Nadelbrettes angeordneten Nadeln.

Eine weitere Ausführungsform der vorliegenden Erfindung besteht in einem dreidimensional geformten Velours-Teppich für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m ² bis 700 g/m ² , weiterhin umfassend eine oder mehrere Unterschichten, wobei die Sichtseite des Teppichs eine dreidimensionale strukturgenadelte, strapazierfähige Oberfläche -bestehend aus 3D-Ornamenten / Teppichmustern über Länge und Breite, die sich in der Höhe (Polhöhe) unterscheidenaufweist.

Die Realisierung soll vorzugsweise zum einen bei einem einlagigen und zum anderen bei einem zweilagigen Velours-Teppich erfolgen. Bei einer zweilagigen Ausführung können hierbei zusätzlich Farbeffekte unterschiedlicher Struktur eingenadelt werden.

### Ausführungsbeispiel:

Zur Herstellung einer verformungsgerechten/-stabilen, strukturgenadelten Bodenverkleidung wurde als Ausgangsvlies ein Vorvlies aus einem Faser-Mix bestehend aus 80% handelsüblichen 13 dtex Fasern, Faserlange 60 mm, PET-Faser und 20% handelsüblichen 6,7 dtex Fasern, Faserlänge 64 mm, PET-Faser genutzt. Das Flächengewicht betrug 480 g/m ² .

Die unterschiedlich langen Gabelnadeln der Firma Groz-Beckert KG 15X16X20X40X73,O D G 9077 / 616751 [Länge: 74/8 mm] und 15X17X32X40X74,8 D G 9077 / 615921 [Länge: 76,6 mm] sind in einem Nadelbrett der Velours IV (8000 n/lm), abwechselnd in 20 cm breiten Streifen eingebaut worden. Der Nullabgleich der Maschine wurde auf die längere der beiden Nadeln abgestimmt.

In die Bürsten des Bürstenbandes wurden Ornament / Muster durch Verkürzung der Bürstenfasern eingearbeitet.

Bei der Herstellung war es wichtig, seitens der Maschineneinstellungen, die optimale Einstichtiefe und die optimale Einstichdichte durch Austesten zu finden.

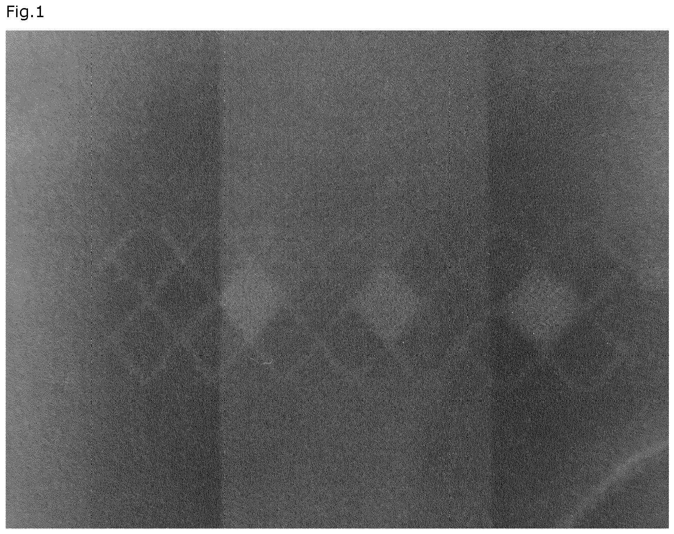

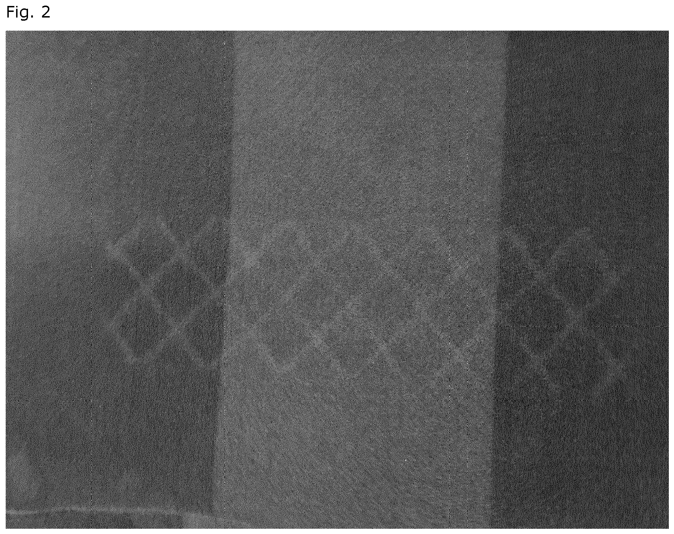

Bei den in Fig. 1 und Fig. 2 dargestellten Velours-Teppich betrug die Einstichdichte 600 Stiche/cm cm ² , und die Einstichtiefe 3 mm.

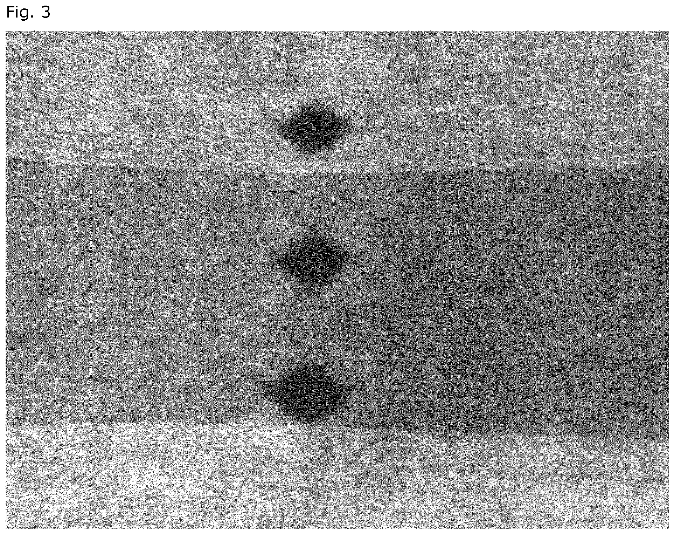

In Fig. 3 ist ein zweilagiger Velours-Teppich (beige und schwarzes Vorvlies) dargestellt. Hier betrug die Einstichdichte 600 Stiche/cm ² , und die Einstichtiefe 7 mm.

## Patentansprüche

1. Verfahren zur Herstellung eines dreidimensional verformbaren Velours-Teppichs für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², das **dadurch gekennzeichnet ist, dass** man bei einer definierten Einstellung der Einstichtiefe der Nadeln sowie einer definierten Einstellung deren Einstichdichte einen Velours-Teppich aus einem Ausgangsvlies herstellt, wobei man
ein Bürstenband einsetzt, das segmentweise oder teilflächig Abschnitte unterschiedlicher Bürsten und/oder Bürstenanordnungen beziehungsweise Bürsten unterschiedlicher Borsten-Höhe aufweist,
zwei oder mehrere Nadeltypen unterschiedlicher Länge segmentweise über die Breite eines Nadelbrettes anordnet, und
diesen Velours-Teppich mit einer oder mehreren Unterschichten versieht und verformt.

2. Verfahren nach Anspruch 1, **dadurch gekennzeichnet,**
**dass** die Strukturierung der Borsten durch Anordnung von Bürstensegmenten, durch unterschiedliche Bürstenhöhe und/oder durch definiertes Platzieren und/oder Entfernen von Borsten im Band und / oder Teilungsstegen erfolgt.

3. Verfahren nach Anspruch 1, **dadurch gekennzeichnet, dass** man Nadeln einsetzt, die sich durch unterschiedliche Länge, Feinheit, Gabelöffnung und der Gabelorientierung unterscheiden.

4. Dreidimensional geformter Velours-Teppich für eine Bodenverkleidung, eine Gepäckraumverkleidung oder eine Ladebodenverkleidung eines Kraftfahrzeuges mit strukturgenadelter, verformungsstabiler Oberfläche mit einer Grammatur des Teppichs im Bereich von 180 g/m² bis 700 g/m², weiterhin umfassend eine oder mehrere Unterschichten, wobei die Sichtseite des Teppichs eine dreidimensionale strukturgenadelte, strapazierfähige Oberfläche, bestehend aus 3D-Ornamenten / Teppichmustern über Länge und Breite, die sich in der Höhe (Polhöhe) unterscheiden, aufweist.

## Claims

1. Method for the production of a three-dimensionally deformable velour carpet for a floor paneling, a luggage compartment paneling or a loading floor paneling of a motor vehicle with a structurally needled, deformation-resistant surface with a grammage of the carpet in the range from 180 g/m² to 700 g/m², which is **characterized in that**
a velour carpet is produced from a basis nonwoven with a defined setting of the penetration depth of the needles and a defined setting of their penetration density, in which
a brush belt is used which has, in segments or over part of the surface, sections of different brushes and/or brush arrangements or brushes of different bristle height,
two or several needle types of different length are arranged in segments over the width of a needle board, and
this velour carpet is provided with one or several underlayers and shaped.

2. Method according to claim 1, **characterized in that**
the structuring of the bristles is carried out by arranging brush segments, by different brush heights and/or by defined placement and/or removal of bristles in the belt and/or dividing webs.

3. Method according to claim 1, **characterized in that** needles are used which differ in length, fineness, fork opening and fork orientation.

4. Three-dimensionally shaped velour carpet for a floor paneling, a luggage compartment paneling or a loading floor paneling of a motor vehicle with a structurally needled, deformation-resistant surface with a grammage of the carpet in the range from 180 g/m² to 700 g/m², further comprising one or several sublayers, wherein the visible side of the carpet has a three-dimensional structurally needled, hard-wearing surface consisting of 3D ornaments/carpet patterns over length and width which differ in height (pile height).

## Revendications

1. Procédé de fabrication d'un tapis en velours déformable en trois dimensions pour un revêtement de sol, un revêtement de coffre à bagages ou un revêtement de sol de chargement d'un véhicule automobile avec une surface à structure aiguilletée, stable à la déformation avec un grammage du tapis dans la plage de 180 g/m² à 700 g/m² qui est **caractérisé en ce qu'**on
fabrique à un réglage défini de la profondeur de piqûre des aiguilles ainsi qu'un réglage défini de sa densité de piqûre un tapis de velours à partir d'un non-tissé de départ, dans lequel on
utilise une bande de brosses qui présente par segment ou sur la surface partielle des sections de différentes brosses et/ou agencements de brosses ou brosses de différente hauteur de poils,
agence deux ou plusieurs types d'aiguille de différente longueur par segment sur la largeur d'une planche d'aiguilles, et
munit ce tapis en velours d'une ou plusieurs sous-couches et le déforme.

2. Procédé selon la revendication 1, **caractérisé en ce**
**que** la structuration des poils est effectuée par agencement de segments de brosses, par hauteur de brosses différente et/ou par placement défini et/ou retrait de poils dans la bande et/ou nervures de séparation.

3. Procédé selon la revendication 1, **caractérisé en ce qu'**on utilise des aiguilles qui se distinguent de par une longueur, finesse, ouverture de fourche et orientation de fourche différente.

4. Tapis en velours formé en trois dimensions pour un revêtement de sol, un revêtement de coffre à bagages ou un revêtement de sol de chargement d'un véhicule automobile avec une surface à structure aiguilletée, stable à la déformation avec un grammage du tapis dans la plage de 180 g/m² à 700 g/m², comprenant en outre une ou plusieurs sous-couches, dans lequel le côté visible du tapis présente une surface en trois dimensions à structure aiguilletée, robuste, se composant d'ornements en 3D / motifs de tapis sur la longueur et la largeur qui se distinguent dans la hauteur (hauteur de pôle).
